# EUROPEAN PATENT APPLICATION

(11) **EP 4 468 448 A1**
(43) Date of publication of application: **27.11.2024**
(21) Application number: 24176745.8
(22) Date of filing: 17.05.2024
(51) Int. Cl.: H01M 10/48, H01M 10/44

(54) **MITIGATING THERMAL RUNAWAY OF A BATTERY**

(30) Priority: 20.05.2023 IN 202311035300; 16.05.2024 US 202418665869
(71) Applicant: Schneider Electric IT Corporation, Foxboro, MA 02035 (US)
(72) Inventor: Ponnusamy, Soundara Mohan, 560067 BANGALORE (IN); Ellendula, Shiva Prasad, 560067 BANGALORE (IN); Purnell, David Michael, FOXBORO, 02035 (US)
(74) Representative: Plasseraud IP

(57) **Abstract**

Disclosed is a battery control system configured to perform a method comprising receiving a signal indicative of a temperature of the battery at a first time, comparing a difference between the temperature of the battery at the first time to a baseline fast-rise temperature to obtain a fast-rise temperature difference, outputting a battery fast-rise temperature signal if the fast-rise temperature difference exceeds a fast-rise temperature difference limit, receiving a signal indicative of the temperature of the battery at a second time, comparing a difference between the temperature of the battery at the second time to a baseline slow-rise temperature to obtain a slow-rise temperature difference, outputting a battery slow-rise temperature signal if the slow-rise temperature difference exceeds a slow-rise temperature difference limit, and setting the baseline slow-rise temperature to the temperature of the battery at the second time if the slow-rise temperature difference is below the slow-rise temperature difference limit.

## Description

### BACKGROUND

### 1. Field of the Disclosure

At least one example in accordance with the present disclosure relates generally to systems and methods for preventing or mitigating thermal runaway in batteries, for example, lead-acid batteries undergoing charge.

### 2. Discussion of Related Art

An uninterruptible power supply (UPS) is electronic device used to provide uninterrupted power supply to its load. A UPS has input and output connections. The input connection is wired to AC mains (Upstream) and the output connection is wired to one or more loads (Downstream).

During normal operation (online operation) a UPS delivers output from input mains through a power factor controller (PFC) and inverter. In the event of input mains failure, the UPS transfers to battery operation and returns to online operation upon return of the input mains. If the output is overloaded, the UPS may transfer to bypass operation and return to online operation upon recovery from overload.

A UPS may include lead-acid batteries for power storage. Typical lead-acid batteries include six cells and output 12V DC. A UPS system may include multiple batteries, for example, two groups of six series-connected batteries. In online operation, a charger module is used to charge the lead-acid batteries. Input to the charger system is regulated high voltage DC, for example, 400V for some 230V output systems and 225V for some 120V output systems. The charger may include a Buck converter which converts high voltage to the level desired for the battery to be charged. The charger may operate in one of three modes of operation based on the battery state of charge (SOC) and discharge, i.e., constant current mode, constant voltage boost mode, and constant voltage float mode. Initially, the charger runs in constant current mode until the voltage across the battery terminals reaches either a Boost/Float voltage based on SOC/Discharge and later the charger runs in constant voltage Boost/float mode. If the charger runs in boost mode, the charger stays in boost mode for some duration and later goes to float mode of operation and temperature compensation and charger current limit is implemented to protect battery from going to higher temperatures.

A known difficulty with lead-acid batteries is the occurrence of thermal events while undergoing charging. These events may be due to battery aging or short circuiting and may lead to thermal runaway events which may damage the batteries and/or equipment in which they are installed.

### BRIEF DESCRIPTION OF DRAWINGS

The accompanying drawings are not intended to be drawn to scale. In the drawings, each identical or nearly identical component that is illustrated in various figures is represented by a like numeral. For purposes of clarity, not every component may be labeled in every drawing. In the drawings:
FIG. 1 is a block diagram of one example of a computer system with which various aspects in accord with the present invention may be implemented;
FIG. 2 is a block diagram of one example of an uninterruptable power supply (UPS) with which various aspects in accord with the present invention may be implemented;
FIG. 3 is a diagram illustrating communications between a controller and a UPS according to one example;
FIG. 4A is a partial flow chart of a method as disclosed herein according to one example; and
FIG. 4B is another partial flow chart of a method as disclosed herein according to one example.

### DETAILED DESCRIPTION

Examples of the methods and systems discussed herein are not limited in application to the details of construction and the arrangement of components set forth in the following description or illustrated in the accompanying drawings. The methods and systems are capable of implementation in other embodiments and of being practiced or of being carried out in various ways. Examples of specific implementations are provided herein for illustrative purposes only and are not intended to be limiting. In particular, acts, components, elements and features discussed in connection with any one or more examples are not intended to be excluded from a similar role in any other examples.

Also, the phraseology and terminology used herein is for the purpose of description and should not be regarded as limiting. Any references to examples, embodiments, components, elements or acts of the systems and methods herein referred to in the singular may also embrace embodiments including a plurality, and any references in plural to any embodiment, component, element or act herein may also embrace embodiments including only a singularity. References in the singular or plural form are no intended to limit the presently disclosed systems or methods, their components, acts, or elements. The use herein of "including," "comprising," "having," "containing," "involving," and variations thereof is meant to encompass the items listed thereafter and equivalents thereof as well as additional items.

References to "or" may be construed as inclusive so that any terms described using "or" may indicate any of a single, more than one, and all of the described terms. In addition, in the event of inconsistent usages of terms between this document and documents incorporated herein by reference, the term usage in the incorporated features is supplementary to that of this document; for irreconcilable differences, the term usage in this document controls.

In some examples of monitoring battery temperature for instances of thermal events such as thermal runaway, one may define fixed temperature thresholds that would cause a control system to generate warning or alarm signals or auto-disconnect the battery from its charger when the battery temperature exceeded the fixed threshold or thresholds. It has been discovered, however, that such method may miss thermal runaway events or may trigger an alarm signal after a thermal runaway event is already in progress and after damage has been done. Accordingly, aspects and embodiments disclosed herein include systems and methods for protection of batteries which include adaptive monitoring methods that are less likely to miss thermal runaway events or that may trigger an alarm signal prior to a thermal runaway event beginning so that it may be prevented prior to damage being done to the battery or system in which it is installed.

Various computing devices may execute examples of the methods disclosed herein. Using data stored in associated memory, in one example, a computer executes one or more instructions stored on one or more non-transitory computer-readable media that may result in manipulated data. In some examples, the computer may include one or more processors or other types of computing hardware. In one example, the computing hardware is or includes a commercially available, general-purpose processor. In another example, the computer performs at least a portion of the operations discussed herein using an application-specific integrated circuit (ASIC) tailored to perform particular operations in addition to, or in lieu of, a general-purpose processor. As illustrated by these examples, examples in accordance with the present invention may perform the operations described herein using many specific combinations of hardware and software and the invention is not limited to any particular combination of hardware and software components.

In various examples, a computer may implement a multi-threading process to execute examples of methods disclosed herein.

Aspects disclosed herein in accordance with the present embodiments, are not limited in their application to the details of construction and the arrangement of components set forth in the following description or illustrated in the drawings. These aspects are capable of assuming other embodiments and of being practiced or of being carried out in various ways. Examples of specific implementations are provided herein for illustrative purposes only and are not intended to be limiting. In particular, acts, elements and features discussed in connection with any one or more embodiments are not intended to be excluded from a similar role in any other embodiments.

### Computer System

Various aspects and functions described herein in accordance with the present embodiments may be implemented as hardware or software on one or more computer systems. There are many examples of computer systems currently in use. These examples include, among others, network appliances, personal computers, workstations, mainframes, networked clients, servers, media servers, application servers, database servers, and web servers. Other examples of computer systems may include mobile computing devices, such as cellular phones and personal digital assistants, and network equipment, such as load balancers, routers and switches. Further, aspects in accordance with the present embodiments may be located on a single computer system or may be distributed among a plurality of computer systems connected to one or more communications networks.

For example, various aspects and functions may be distributed among one or more computer systems configured to provide a service to one or more client computers, or to perform an overall task as part of a distributed system. Additionally, aspects may be performed on a client-server or multi-tier system that includes components distributed among one or more server systems that perform various functions. hus, the embodiments are not limited to executing on any particular system or group of systems. Further, aspects may be implemented in software, hardware or firmware, or any combination thereof. Thus, aspects in accordance with the present embodiments may be implemented within methods, acts, systems, system elements and components using a variety of hardware and software configurations, and the embodiments are not limited to any particular distributed architecture, network, or communication protocol.

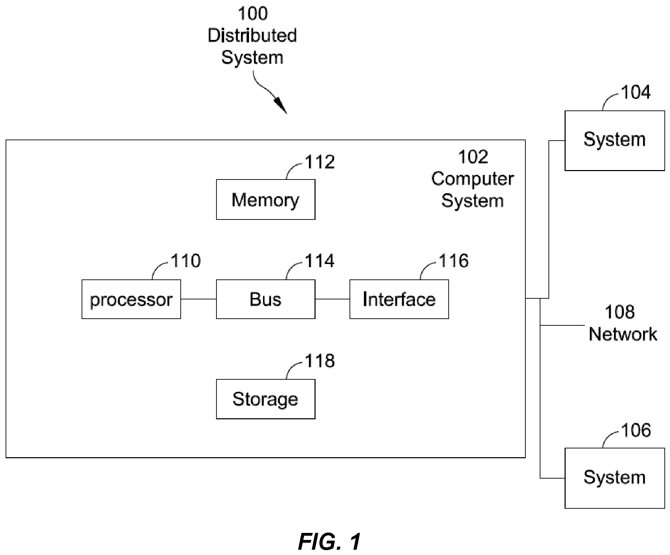

FIG. 1 shows a block diagram of a distributed computer system 100, in which various aspects and functions in accord with the present embodiments may be practiced. Distributed computer system 100 may include one more computer systems. For example, as illustrated, distributed computer system 100 includes computer systems 102, 104, and 106. As shown, computer systems 102, 104, and 106 are interconnected by, and may exchange data through, communication network 108. Network 108 may include any communication network through which computer systems may exchange data. To exchange data using network 108, computer systems 102, 104, and 106 and network 108 may use various methods, protocols and standards, including, among others, token ring, Ethernet, wireless Ethernet, Bluetooth, TCP/IP, UDP, Http, FTP, SNMP, SMS, MMS, SS7, Json, Soap, and Corba. To ensure data transfer is secure, computer systems 102, 104, and 106 may transmit data via network 108 using a variety of security measures including TLS, SSL, or VPN among other security techniques. While distributed computer system 100 illustrates three networked computer systems, distributed computer system 100 may include any number of computer systems and computing devices, networked using any medium and communication protocol.

Various aspects and functions in accordance with the present embodiments may be implemented as specialized hardware or software executing in one or more computer systems including computer system 102 shown in FIG. 1. As depicted, computer system 102 includes processor 110, memory 112, bus 114, interface 116, and storage 118. Processor 110 may perform a series of instructions that result in manipulated data. Processor 110 may be a commercially available processor such as an Intel Core^{®}, Motorola PowerPC, SGI MIPS, Sun UltraSPARC, or Hewlett-Packard PA-RISC processor, but may be any type of processor, multi-processor, microprocessor, or controller as many other processors and controllers are available. Processor 110 is connected to other system elements, including one or more memory devices 112, by bus 114. In some embodiments, processor 110 may include multiple processors or different portions of processing circuitry that may perform different portions of examples of methods disclosed herein.

Memory 112 may be used for storing programs and data during operation of computer system 102. Thus, memory 112 may be a relatively high performance, volatile, random access memory such as a dynamic random access memory (DRAM) or static memory (SRAM). However, memory 112 may include any device for storing data, such as a disk drive or other non-volatile, non-transitory, storage device. Various embodiments in accordance with the present invention may organize memory 112 into particularized and, in some cases, unique structures to perform the aspects and functions disclosed herein.

Components of computer system 102 may be coupled by an interconnection element such as bus 114. Bus 114 may include one or more physical busses, for example, busses between components that are integrated within a same machine but may include any communication coupling between system elements including specialized or standard computing bus technologies such as IDE, SCSI, PCI, and InfiniBand. Thus, bus 114 enables communications, for example, data and instructions, to be exchanged between system components of computer system 102.

Computer system 102 also includes one or more interface devices 116 such as input devices, output devices, and combination input/output devices. Interface devices may receive input or provide output. More particularly, output devices may render information for external presentation. The interface devices 116 may include, for example, one or more graphical user interfaces that may be disposed proximate to or separate from other components of the computer system 102. A graphical user interface of the computer system 102 may, for example, be displayed through a web browser that accesses information from the memory 112. Input devices may accept information from external sources. Examples of interface devices include keyboards, mouse devices, trackballs, microphones, touch screens, printing devices, display screens, speakers, network interface cards, temperature sensors, etc. Interface devices allow computer system 102 to exchange information and communicate with external entities, such as users and other systems.

Storage system 118 may include a computer readable and writeable, nonvolatile, non-transitory, storage medium in which instructions are stored that define a program to be executed by the processor. The program to be executed by the processor may cause the processor 100 or computer system 102 to perform any one or more embodiments of the methods disclosed herein. Storage system 118 also may include information that is recorded, on or in, the medium, and this information may be processed by the program. More specifically, the information may be stored in one or more data structures specifically configured to conserve storage space or increase data exchange performance. The instructions may be persistently stored as encoded signals, and the instructions may cause a processor to perform any of the functions described herein. The medium may, for example, be optical disk, magnetic disk, or flash memory, among others. In operation, the processor or some other controller may cause data to be read from the nonvolatile recording medium into another memory, such as memory 112, that allows for faster access to the information by the processor than does the storage medium included in storage system 118. The memory may be located in storage system 118 or in memory 112, however, processor 110 may manipulate the data within the memory 112, and then may copy the data to the medium associated with storage system 118 after processing is completed. A variety of components may manage data movement between the medium and integrated circuit memory element and the presently described embodiments are not limited thereto. Further, the embodiments are not limited to a particular memory system or data storage system. Portions of the memory 112 or storage system 118 may be included in the same computer system as other components of the computer system 102 or may be resident in a cloud-based system that is accessible via the internet or other communications system or protocol.

Although computer system 102 is shown by way of example as one type of computer system upon which various aspects and functions in accordance with the present embodiments may be practiced, any aspects of the presently disclosed embodiments are not limited to being implemented on the computer system as shown in FIG. 1. Various aspects and functions in accord with the presently disclosed embodiments may be practiced on one or more computers having a different architectures or components than that shown in FIG. 1. For instance, computer system 102 may include specially-programmed, special-purpose hardware, for example, an application-specific integrated circuit (ASIC) tailored to perform a particular operation disclosed herein. While another embodiment may perform the same function using several general-purpose computing devices running MAC OS System X with Motorola PowerPC processors and several specialized computing devices running proprietary hardware and operating systems.

Computer system 102 may be a computer system including an operating system that manages at least a portion of the hardware elements included in computer system 102. Usually, a processor or controller, such as processor 110, executes an operating system which may be, for example, a Windows-based operating system such as Windows NT, Windows 10, Windows XP, or Windows Vista operating systems, available from the Microsoft Corporation, a MAC OS System X operating system available from Apple Computer, one of many Linux-based operating system distributions, for example, the Enterprise Linux operating system available from Red Hat Inc., a Solaris operating system available from Sun Microsystems, or a UNIX operating system available from various sources. Many other operating systems may be used, and embodiments are not limited to any particular implementation.

The processor and operating system together define a computer platform for which application programs in high-level programming languages may be written. These component applications may be executable, intermediate, for example, C-, bytecode or interpreted code which communicates over a communication network, for example, the Internet, using a communication protocol, for example, TCP/IP. Similarly, aspects in accord with the presently disclosed embodiments may be implemented using an object-oriented programming language, such as .Net, SmallTalk, Java, C++, Ada, or C# (C-Sharp). Other object-oriented programming languages may also be used. Alternatively, functional, scripting, or logical programming languages may be used.

Additionally, various aspects and functions in accordance with the presently disclosed embodiments may be implemented in a non-programmed environment, for example, documents created in HTML, XML, or other format that, when viewed in a window of a browser program, render aspects of a graphical-user interface or perform other functions. Further, various embodiments in accord with the present invention may be implemented as programmed or non-programmed elements, or any combination thereof. For example, a web page may be implemented using HTML while a data object called from within the web page may be written in C++. Thus, the presently disclosed embodiments are not limited to a specific programming language and any suitable programming language could also be used.

A computer system included within an embodiment may perform additional functions outside the scope of the presently disclosed embodiments. For instance, aspects of the system may be implemented using an existing commercial product, such as, for example, Database Management Systems such as SQL Server available from Microsoft of Seattle WA., Oracle Database from Oracle of Redwood Shores, CA, and MySQL from MySQL AB, a subsidiary of Oracle or integration software such as Web Sphere middleware from IBM of Armonk, NY. However, a computer system running, for example, SQL Server may be able to support both aspects in accord with the presently disclosed embodiments and databases for sundry applications.

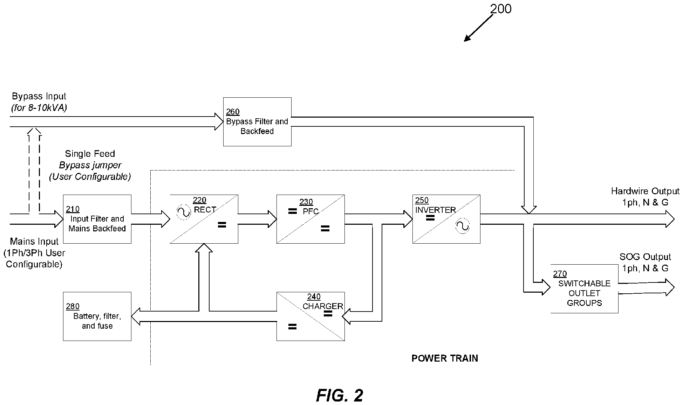

FIG. 2 illustrates a block diagram of an example of an uninterruptible power supply (UPS) 200 in which systems and methods disclosed herein may be implemented. The UPS 200 includes an input filter and mains backfeed 210 which contains the input wiring connection, input configuration means, and a portion of an electromagnetic interference (EMI) filter. The input filter and mains backfeed 210 provide mains power to a rectifier 220, a power factor controller (PFC) 230, and a charger 240. The purpose of the PFC 230 is to convert AC power from the mains, or when the mains is not acceptable, battery power, to DC power which is distributed to the DC bus and is supplied to an inverter 250 and the battery charger 240. The charger 240 is a DC-to-DC converter that supplies power to the main logic power supply and the battery. A bypass filter and backfeed relay 260 supply input voltage directly to the load when desired. The inverter 250 converts the DC power bus voltage to PWM voltage which when averaged produces sine-wave output waveform. A switchable outlet group 270 provides controlled power distribution to each outlet group or non-controlled to a hardwire connection. A battery, fuse, and filter, illustrated collectively at 280, provide DC power to the PFC if AC mains are unacceptable. As the term is used herein a "battery" may include multiple batteries connected in series or parallel and may include a battery pack. The battery 280 may be disposed within the same housing as one or more other components of the UPS 200 or may be disposed remote from one or more, or all, other components of the UPS.

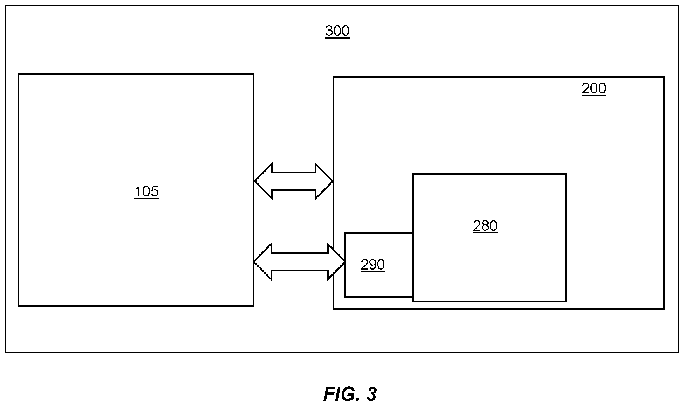

As shown in FIG. 3, a controller 105, such as one or more of the computer systems 102, 104, 106 of the distributed computer system 100 of FIG. 1, may be in communication with the components of the UPS 200 of FIG. 2, represented collectively in FIG. 3 at 200, as well as with a temperature sensor 290 in thermal communication with a battery 280. The temperature sensor may be or may include a thermocouple, thermistor, or other temperature sensor known in the art. The controller 105 may be included in the same housing 300 as one or more other components of the UPS 200 or may be disposed remote from the UPS 200 or from one or more components thereof.

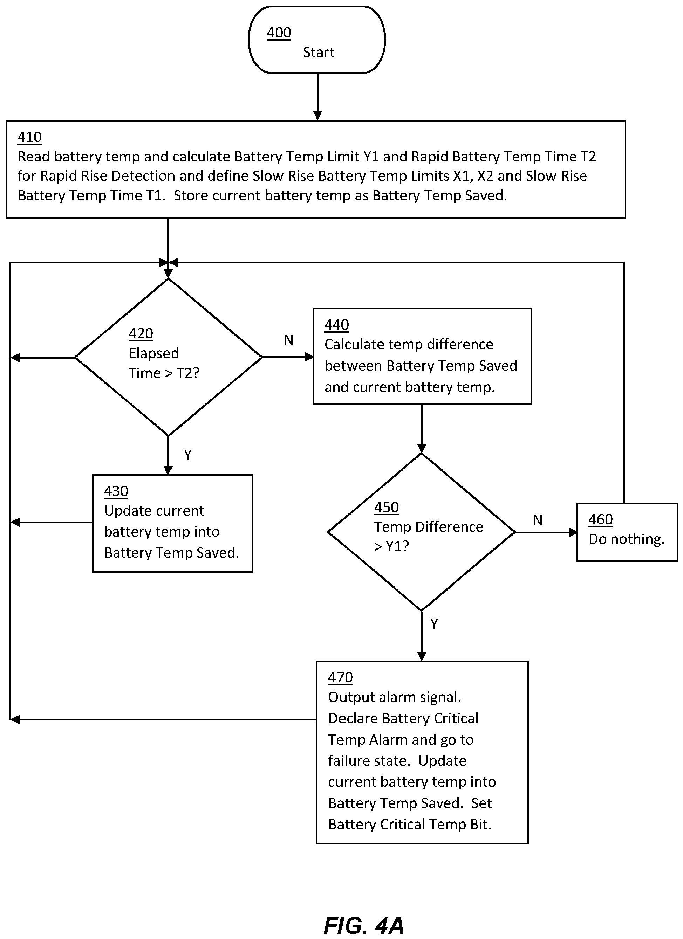

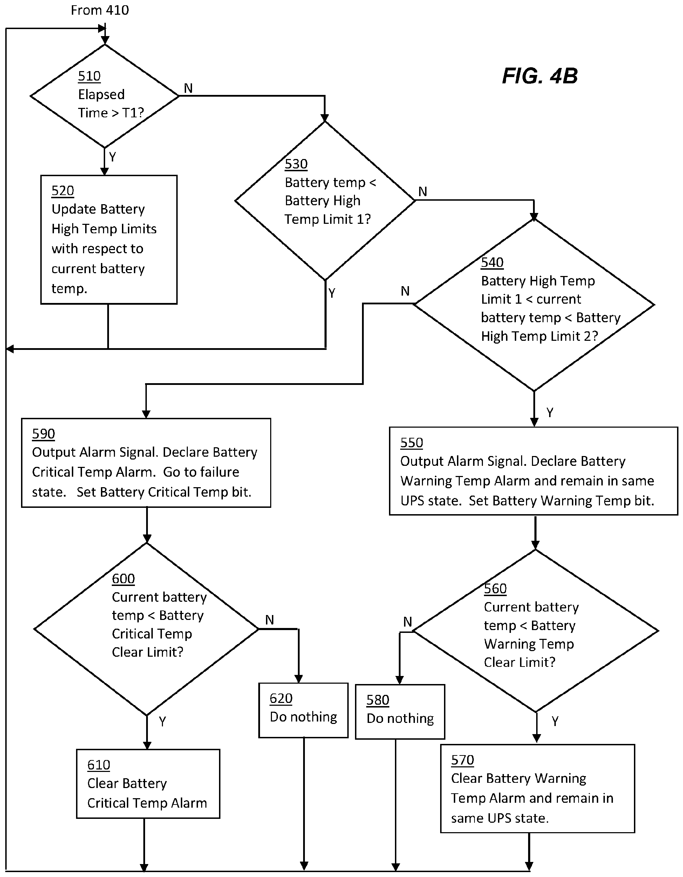

A method of monitoring and controlling the UPS 200 with the controller 105 to avoid or mitigate the effects of thermal events associated with the UPS battery 280, for example, thermal runaway events during charging, is illustrated in the flowcharts of FIGS. 4A and 4B. FIG. 4A is primary descriptive of a portion of the method used to detect and respond to rapid changes in battery temperature and may be referred to as a "rapid rise detection" sub-method. FIG. 4B is primarily descriptive of a portion of the method used to detect and respond to changes in battery temperature that occur on a time scale greater than the "rapid rise detection" sub-method is designed to detect and may be referred to as a "slow-rise detection" sub-method.

The method begins at act 400. A preliminary act that is applicable to both the "rapid rise detection" sub-method and the "slow-rise detection" sub-method is illustrated as act 410 in which the battery temperature is measured and saved to memory as the variable "Battery Temp Saved" although this variable may be given any appropriate name. In other embodiments, the "Battery Temp Saved" variable may be initialized to a predetermined value, for example, room temperature, rather than the preliminary measured battery temperature. The "Battery Temp Saved" variable may represent a baseline fast-rise temperature and/or a baseline slow-rise temperature. In act 410 a battery temperature difference limit Y1 is defined for use in the "rapid rise detection" sub-method and battery temperature difference limits X1 and X2 are defined for use in the "slow-rise detection" sub-method. These battery temperature difference limits specify temperatures above the previously set baseline battery temperature (the temperature saved in the "Battery Temp Saved" variable) at which alarm signals may be generated. The battery temperature difference limit Y1 may be set at a few degrees, for example, from 3°C to 6°C, about 4°C, or about 5°C, although different temperature difference limits may be used in different implementations. The battery temperature difference limits X1 and X2 may be set at a few degrees higher than Yl, for example, from about 10°C to 15°C for X1 and about 20°C for X2, although, again, different temperature difference limits may be used in different implementations. Also defined in act 410 are the time duration variables T2 and T1, which relate to periodic rates at which the battery temperature is checked or the "Battery Temp Saved" temperature is updated in the "rapid rise detection" sub-method and the "slow-rise detection" sub-method, respectively. T2 may be set to, for example, about 4 minute or about 5 minutes and T1 may be set to, for example, about 12 hours, although different time durations may be used in different implementations.

Referring now specifically to the "rapid rise detection" sub-method described by the flowchart of FIG. 4A, in act 420, the controller 105 checks to see if an amount of time T2 has elapsed since the initial or previous "Battery Temp Saved" temperature variable update. If yes, the battery temperature is measured and the "Battery Temp Saved" temperature variable is updated with the newly measured battery temperature (act 430). If in act 420 it is determined that the amount of time T2 has not yet elapsed since the initial or previous "Battery Temp Saved" temperature variable update the method proceeds to act 440 wherein the battery temperature is measured and a difference between the newly measured battery temperature and the temperature recorded in the "Battery Temp Saved" temperature variable is calculated to obtain a fast-rise temperature difference. In act 450, the fast-rise temperature difference calculated in act 440 is compared against the fast-rise temperature difference limit Y1. If the temperature difference is not greater than Y1, then no action is taken at act 460 and the method returns to act 420. If, however, the temperature difference calculated in act 440 is greater than Y1, the method proceeds to act 470 in which a battery fast-rise temperature signal is output. The battery fast-rise temperature signal may cause a Battery Critical Temperature Alarm to be declared and displayed to a user via a visual and/or auditory alarm. An alarm indicator, for example, a "Battery Critical Temp Bit" in the memory of the controller 105 may be set to a value indicative of the occurrence of the Battery Critical Temperature Alarm. The UPS may automatically enter into a failure state in which the charge current to the battery is reduced or turned off. Alternatively, the controller 105 may request a user for input on how to respond to the alarm and may take an action requested by the user, such as reducing charge current or electrically disconnecting the battery from the charger. The "Battery Temp Saved" variable is updated with the temperature measured in act 440. The battery fast-rise temperature signal and/or Battery Critical Temperature Alarm persists until corrective action is taken at which point the method may reset and return to act 420.

Referring now specifically to the "slow-rise detection" sub-method described by the flowchart of FIG. 4B, after acts 400 and 410 of FIG. 4A are performed, in act 510, the controller 105 checks to see if an amount of time T1 has elapsed since the initial or previous update of the battery temperature limits X1 and X2. If yes, the method proceeds to act 520 in which the current battery temperature is read and the battery temperature thresholds defined by the sum of limits X1 and X2 and the battery temperature, indicated in the flowchart as "Battery High Temp Limit 1" and "Battery High Temp Limit 2", respectively, are updated to the desired levels above the current battery temperature and the method returns to act 510. If an amount of time T1 has not elapsed since the initial or previous update of the battery temperature thresholds associated with X1 and X2 the method proceeds to act 530 in which the battery temperature is read to obtain a slow-rise temperature difference which is compared to the first predetermined slow-rise temperature difference limit X1. This comparison may alternatively involve comparing the current battery temperature to the temperature recorded in the Battery High Temp Limit 1 variable. If the slow-rise temperature difference is less than the first predetermined slow-rise temperature difference limit X1, the method returns to act 510.

If the slow-rise temperature difference calculated in act 530 is equal to or greater than the first predetermined slow-rise temperature difference limit X1, the method proceeds to act 540 and a determination is made as to whether the slow-rise temperature difference is between the first and second predetermined slow-rise temperature difference limits X1 and X2. This comparison may alternatively involve comparing the current battery temperature to the temperature recorded in the Battery High Temp Limit 1 and Battery High Temp Limit 2 variables to determine if the current battery temperature is between the temperatures recorded in these variables. If the slow-rise temperature difference is between the predetermined slow-rise temperature difference limits X1 and X2, i.e., above temperature difference limit X1 and below temperature difference limit X2, the method proceeds to act 550 and a battery slow-rise temperature signal is output. The battery slow-rise temperature signal may cause a Battery Warning Temperature Alarm to be declared and announced to a user via a visual and/or audible alarm signal. No change is made to the operation of the UPS responsive to the battery slow-rise temperature signal or Battery Warning Temperature Alarm, but an alarm indicator, for example, a "Battery Warning Temp Bit" in the memory of the controller 105 may be set to a value indicative of the output of the battery slow-rise temperature signal or occurrence of the Battery Warning Temperature Alarm. The method proceeds to act 560 to determine if the battery temperature is below a battery warning temperature clear limit, which may be a temperature defined by the sum of the temperature recorded in the "Battery Temp Saved" variable and a difference between temperature difference limit variables X1 and X3, X3<X1, where X3 may be about 5°C (battery warning temperature clear limit = "Battery Temp Saved" + (X1-X3)). If the battery temperature is below the battery warning temperature clear limit, the battery slow-rise temperature signal is terminated, and the Battery Warning Temperature Alarm is cleared in act 570 and the method returns to act 510. If the battery temperature is not below the battery warning temperature clear limit, the battery slow-rise temperature signal and/or Battery Warning Temperature Alarm is maintained (act 580 - Do Nothing) and the method returns to act 510.

If in act 540 a determination is made that the slow-rise temperature difference is not between the battery temperature difference limits X1 and X2, i.e., above temperature difference limit X1 and above temperature difference limit X2, the method proceeds to act 590 and a second battery slow-rise temperature signal is output. The second battery slow-rise temperature signal may be the same as the battery fast-rise temperature signal or may be a different signal. The output of the second battery slow-rise temperature signal may cause a Battery Critical Temperature Alarm to be declared and announced to a user via a visual and/or audible alarm signal and a "Battery Critical Temp Bit" in the memory of the controller 105 may be set to a value indicative of the output of the second battery slow-rise temperature signal and/or the occurrence of the Battery Critical Temperature Alarm. The UPS may automatically enter into a failure state in which the charge current to the battery is reduced or turned off. Alternatively, the controller 105 may request a user for input on how to respond to the output of the second battery slow-rise temperature signal and/or the occurrence of the Battery Critical Temperature Alarm and may take an action requested by the user, such as reducing charge current or electrically disconnecting the battery from the charger. The method proceeds to act 600 to determine if the battery temperature is below a battery critical temperature clear limit, which may be a temperature defined by the sum of the temperature recorded in the "Battery Temp Saved" variable and a difference between temperature difference limit variables X2 and X3, X3<X2 (battery critical temperature clear limit = "Battery Temp Saved" + (X1-X3)). If the battery temperature is below the battery critical temperature clear limit, the second battery slow-rise temperature signal is terminated and the Battery Critical Temperature Alarm is cleared in act 610, the UPS may be restored to normal operation, for example, by resetting the charge current to the battery, and the method returns to act 510. If the battery temperature is not below the battery critical temperature clear limit, the second battery slow-rise temperature signal and/or Battery Critical Temperature Alarm is maintained (act 620 - Do Nothing) and the method returns to act 510.

The method illustrated in the flowcharts of FIGS. 4A and 4B thus checks for undesired rise in the temperature of a battery in two manners - a determination is made as to whether the temperature of the battery rises slowly until it exceeds an upper limit, and a determination is made if the temperature of the battery is rising more quickly than expected. The temperature thresholds at which these two different manners of temperature rise monitoring will output a warning signal are adjusted based on normal changes in temperature of the battery, for example, if the ambient temperature in a room in which the battery is disposed changes. The disclosed method may thus be more effective in detecting undesired battery temperature increases or thermal runaways than methods that rely on a single predetermined absolute temperature threshold to determine if an undesired battery temperature has been met or that may be indicative of a thermal runaway event in progress.

Further examples are provided in the following clauses:
Clause 1. A battery control system configured to perform a method comprising:
   receiving a first signal indicative of a temperature of the battery at a first time;
   comparing a difference between the temperature of the battery at the first time to a baseline fast-rise temperature to obtain a fast-rise temperature difference;
   outputting a battery fast-rise temperature signal responsive to the fast-rise temperature difference exceeding a predetermined fast-rise temperature difference limit;
   receiving a second signal indicative of the temperature of the battery at a second time;
   comparing a difference between the temperature of the battery at the second time to a baseline slow-rise temperature to obtain a slow-rise temperature difference;
   outputting a battery slow-rise temperature signal responsive to the slow-rise temperature difference exceeding a first predetermined slow-rise temperature difference limit; and
   setting the baseline slow-rise temperature to the temperature of the battery at the second time responsive to the slow-rise temperature difference not exceeding the first predetermined slow-rise temperature difference limit.
Clause 2. The system of clause 1, wherein the control system is further configured to output the battery slow-rise temperature signal responsive to the slow-rise temperature difference being between the first predetermined slow-rise temperature difference limit and a second predetermined slow-rise temperature difference limit higher than the first predetermined slow-rise temperature difference limit.
Clause 3. The system of clause 2, wherein the control system is further configured to output a second battery slow-rise temperature signal responsive to the slow-rise temperature difference exceeding the second predetermined slow-rise temperature difference limit.
Clause 4. The system of clause 2, wherein the control system is further configured to perform an action to remediate a further increase in the temperature of the battery responsive to at least one of the slow-rise temperature difference exceeding the second predetermined slow-rise temperature difference limit or the fast-rise temperature difference exceeding the predetermined fast-rise temperature difference limit.
Clause 5. The system of clause 4, wherein the action to remediate the further increase in the temperature of the battery includes decreasing a charge rate of the battery.
Clause 6. The system of clause 3, wherein the battery fast-rise temperature signal and the second battery slow-rise temperature signal comprise a same signal.
Clause 7. The system of clause 3, wherein the control system is further configured to terminate the second battery slow-rise temperature signal responsive to the battery temperature being below a battery critical temperature clear limit.
Clause 8. The system of clause 1, wherein the control system is further configured to set the baseline fast-rise temperature to the temperature of the battery at the first time responsive to fast-rise temperature difference not exceeding the predetermined fast-rise temperature difference limit at the first time.
Clause 9. The system of clause 1, wherein the control system is further configured to repeat obtaining the fast-rise temperature difference at a first periodic rate and to repeat obtaining the slow-rise temperature difference at a second periodic rate that is less than the first periodic rate.
Clause 10. The system of clause 1, wherein the battery is a lead-acid battery.
Clause 11. The system of clause 1, wherein the battery is installed in an uninterruptable power supply.
Clause 12. The system of clause 1, wherein the control system is further configured to terminate the battery slow-rise temperature signal responsive to the battery temperature being below a battery warning temperature clear limit.
Clause 13. A method of mitigating thermal runaway of a battery, the method comprising:
   receiving a first signal indicative of a first temperature of the battery at a first periodic rate;
   comparing a difference between the first temperature of the battery to a baseline fast-rise temperature to obtain a fast-rise temperature difference;
   outputting a battery fast-rise temperature signal responsive to the fast-rise temperature difference exceeding a predetermined fast-rise temperature difference limit;
   receiving a second signal indicative of a second temperature of the battery at a second periodic rate that is less than the first periodic rate;
   comparing a difference between the second temperature of the battery to a baseline slow-rise temperature to obtain a slow-rise temperature difference;
   outputting a battery slow-rise temperature signal responsive to the slow-rise temperature difference exceeding a first predetermined slow-rise temperature difference limit; and
   setting the baseline slow-rise temperature to the second temperature of the battery responsive to the slow-rise temperature difference not exceeding the first predetermined slow-rise temperature difference limit.
Clause 14. The method of clause 13, wherein the battery slow-rise temperature signal is output responsive to the slow-rise temperature difference being between the first predetermined slow-rise temperature difference limit and a second predetermined slow-rise temperature difference limit higher than the first predetermined slow-rise temperature difference limit.
Clause 15. The method of clause 14, further comprising outputting a second battery slow-rise temperature signal responsive to the slow-rise temperature difference exceeding the second predetermined slow-rise temperature difference limit.
Clause 16. The method of clause 14, further comprising performing an action to remediate a further increase in the temperature of the battery responsive to at least one of the slow-rise temperature difference exceeding the second predetermined slow-rise temperature difference limit or the fast-rise temperature difference exceeding the predetermined fast-rise temperature difference limit.
Clause 17. The method of clause 16, wherein the action to remediate the further increase in the temperature of the battery includes decreasing a charge rate of the battery.
Clause 18. The method of clause 14, further comprising terminating the second battery slow-rise temperature signal responsive to the battery temperature being below a battery critical temperature clear limit.
Clause 19. The method of clause 13, further comprising setting the baseline fast-rise temperature to the first temperature of the battery responsive to fast-rise temperature difference not exceeding the predetermined fast-rise temperature difference limit.
Clause 20. The method of clause 13, further comprising terminating the battery slow-rise temperature signal responsive to the battery temperature being below a battery warning temperature clear limit.
Clause 21. A non-transitory computer readable medium having instructions encoded therein which, when executed by a battery control system, cause the battery control system to perform a method comprising:
   receiving a first signal indicative of a first temperature of the battery at a first periodic rate;
   comparing a difference between the first temperature of the battery to a baseline fast-rise temperature to obtain a fast-rise temperature difference;
   outputting a battery fast-rise temperature signal responsive to the fast-rise temperature difference exceeding a predetermined fast-rise temperature difference limit;
   receiving a second signal indicative of a second temperature of the battery at a second periodic rate that is less than the first periodic rate;
   comparing a difference between the second temperature of the battery to a baseline slow-rise temperature to obtain a slow-rise temperature difference;
   outputting a battery slow-rise temperature signal responsive to the slow-rise temperature difference exceeding a first predetermined slow-rise temperature difference limit; and
   setting the baseline slow-rise temperature to the second temperature of the battery responsive to the slow-rise temperature difference not exceeding the first predetermined slow-rise temperature difference limit.
Clause 22. The non-transitory computer readable medium of clause 21, wherein the instructions further cause the battery control system to output the battery slow-rise temperature responsive to the slow-rise temperature difference being between the first predetermined slow-rise temperature difference limit and a second predetermined slow-rise temperature difference limit higher than the first predetermined slow-rise temperature difference limit.
Clause 23. The non-transitory computer readable medium of clause 21, wherein the instructions further cause the battery control system to output a second battery slow-rise temperature signal responsive to the slow-rise temperature difference exceeding the second predetermined slow-rise temperature difference limit.
Clause 24. The non-transitory computer readable medium of clause 21, wherein the instructions further cause the battery control system to perform an action to remediate a further increase in the temperature of the battery responsive to at least one of the slow-rise temperature difference exceeding the second predetermined slow-rise temperature difference limit or the fast-rise temperature difference exceeding the predetermined fast-rise temperature difference limit.
Clause 25. The non-transitory computer readable medium of clause 24, wherein the action to remediate the further increase in the temperature of the battery includes decreasing a charge rate of the battery.
Clause 26. The non-transitory computer readable medium of clause 21, wherein the instructions further cause the battery control system to terminate the second battery slow-rise temperature signal responsive to the battery temperature being below a battery critical temperature clear limit.
Clause 27. The non-transitory computer readable medium of clause 21, wherein the instructions further cause the battery control system to set the baseline fast-rise temperature to the first temperature of the battery responsive to fast-rise temperature difference not exceeding the predetermined fast-rise temperature difference limit.
Clause 28. The non-transitory computer readable medium of clause 21, wherein the instructions further cause the battery control system to terminate the battery slow-rise temperature signal responsive to the battery temperature being below a battery warning temperature clear limit.

Having thus described several aspects of at least one embodiment of this invention, it is to be appreciated various alterations, modifications, and improvements will readily occur to those skilled in the art. Such alterations, modifications, and improvements are intended to be part of this disclosure and are intended to be within the spirit and scope of the invention. Accordingly, the foregoing description and drawings are by way of example only.

## Claims

1. A method of mitigating thermal runaway of a battery, the method comprising:
receiving a first signal indicative of a first temperature of the battery at a first periodic rate;
comparing a difference between the first temperature of the battery to a baseline fast-rise temperature to obtain a fast-rise temperature difference;
outputting a battery fast-rise temperature signal responsive to the fast-rise temperature difference exceeding a predetermined fast-rise temperature difference limit;
receiving a second signal indicative of a second temperature of the battery at a second periodic rate that is less than the first periodic rate;
comparing a difference between the second temperature of the battery to a baseline slow-rise temperature to obtain a slow-rise temperature difference;
outputting a battery slow-rise temperature signal responsive to the slow-rise temperature difference exceeding a first predetermined slow-rise temperature difference limit; and
setting the baseline slow-rise temperature to the second temperature of the battery responsive to the slow-rise temperature difference not exceeding the first predetermined slow-rise temperature difference limit.

2. The method of claim 1, wherein the battery slow-rise temperature signal is output responsive to the slow-rise temperature difference being between the first predetermined slow-rise temperature difference limit and a second predetermined slow-rise temperature difference limit higher than the first predetermined slow-rise temperature difference limit.

3. The method of claim 2, further comprising outputting a second battery slow-rise temperature signal responsive to the slow-rise temperature difference exceeding the second predetermined slow-rise temperature difference limit.

4. The method of claim 2, further comprising performing an action to remediate a further increase in the temperature of the battery responsive to at least one of the slow-rise temperature difference exceeding the second predetermined slow-rise temperature difference limit or the fast-rise temperature difference exceeding the predetermined fast-rise temperature difference limit.

5. The method of claim 4, wherein the action to remediate the further increase in the temperature of the battery includes decreasing a charge rate of the battery.

6. The method of claim 2, further comprising terminating the second battery slow-rise temperature signal responsive to the battery temperature being below a battery critical temperature clear limit.

7. The method of any of the above claims, further comprising setting the baseline fast-rise temperature to the first temperature of the battery responsive to fast-rise temperature difference not exceeding the predetermined fast-rise temperature difference limit.

8. The method of any of the above claims, further comprising terminating the battery slow-rise temperature signal responsive to the battery temperature being below a battery warning temperature clear limit.

9. A battery control system configured to operate according to any of the above method claims.

10. The battery control system of claim 9 configured to operate according to claim 3, wherein the battery fast-rise temperature signal and the second battery slow-rise temperature signal comprise a same signal.

11. The battery control system of claim 9, wherein the control system is further configured to repeat obtaining the fast-rise temperature difference at a first periodic rate and to repeat obtaining the slow-rise temperature difference at a second periodic rate that is less than the first periodic rate.

12. The battery control system of any of the claims 9 to 11, wherein the battery is a lead-acid battery.

13. The system of any of the claims 9 to 11, wherein the battery is installed in an uninterruptable power supply.

14. A non-transitory computer readable medium having instructions encoded therein which, when executed by a battery control system according to any of claims 9 to 13, cause the battery control system to perform a method according to any of the claims 1 to 8.
